(19) 

Europäisches
Patentamt
European
Patent Office
Office européen
des brevets

(11)  **EP 4 404 413 A1**

(12)  **EUROPEAN PATENT APPLICATION**
published in accordance with Art. 153(4) EPC

(43) Date of publication:
 **24.07.2024 Bulletin 2024/30**

(21) Application number: **23821468.8**

(22) Date of filing: **09.11.2023**

(51) International Patent Classification (IPC):
 *H02J 3/28* (2006.01)    *H02J 3/32* (2006.01)
 *H02J 3/18* (2006.01)    *H02J 3/38* (2006.01)

(52) Cooperative Patent Classification (CPC):
 **H02J 3/18; H02J 3/28; H02J 3/32; H02J 3/38;**
 **Y02E 10/56**

(86) International application number:
 **PCT/CN2023/130852**

(87) International publication number:
 **WO 2024/109557 (30.05.2024 Gazette 2024/22)**

(84) Designated Contracting States:
 **AL AT BE BG CH CY CZ DE DK EE ES FI FR GB**
 **GR HR HU IE IS IT LI LT LU LV MC ME MK MT NL**
 **NO PL PT RO RS SE SI SK SM TR**
 Designated Extension States:
 **BA**
 Designated Validation States:
 **KH MA MD TN**

(30) Priority: **23.11.2022 CN 202211474415**

(71) Applicants:
 • **China Three Gorges Corporation**
  **Wuhan, Hubei 430014 (CN)**
 • **China Three Gorges Renewables (Group) Co.,**
  **Ltd.**
  **Beijing 101199 (CN)**
 • **Electric Power Planning and Engineering**
  **Institute Co., Ltd.**
  **Beijing 100120 (CN)**

(72) Inventors:
 • **TANG, Lanxi**
  **Wuhan, Hubei 430014 (CN)**
 • **LI, Peng**
  **Wuhan, Hubei 430014 (CN)**

 • **DU, Zhongming**
  **Wuhan, Hubei 430014 (CN)**
 • **YANG, Weiwei**
  **Wuhan, Hubei 430014 (CN)**
 • **XU, Dongjie**
  **Wuhan, Hubei 430014 (CN)**
 • **LIU, Siyuan**
  **Wuhan, Hubei 430014 (CN)**
 • **WANG, Yating**
  **Wuhan, Hubei 430014 (CN)**
 • **WANG, Shuang**
  **Wuhan, Hubei 430014 (CN)**
 • **CUI, Yang**
  **Wuhan, Hubei 430014 (CN)**
 • **CAI, Chen**
  **Wuhan, Hubei 430014 (CN)**
 • **GUO, Huiqian**
  **Wuhan, Hubei 430014 (CN)**
 • **WANG, Penglei**
  **Wuhan, Hubei 430014 (CN)**

(74) Representative: **Elzaburu S.L.P.**
 **Edificio Torre de Cristal**
 **Paseo de la Castellana 259 C, planta 28**
 **28046 Madrid (ES)**

(54) **REACTIVE COMPENSATION CAPACITY CONFIGURATION METHOD, APPARATUS AND DEVICE FOR WIND-PHOTOVOLTAIC-STORAGE STATION**

(57) The present invention discloses a reactive compensation capacity allocation method, apparatus and device of a wind-photovoltaic-energy storage station, the method includes: calculating a maximum stored-energy active power and a maximum wind-power active power under different actual photovoltaic active power conditions; calculating a station reactive loss and a station reactive power corresponding to each actual photovoltaic active power condition based on an actual photovoltaic active power, the maximum stored-energy active power and the maximum wind-power active power under each actual photovoltaic active power condition; determining a reactive compensation demand under each actual photovoltaic active power condition by using a difference between the station reactive loss and the station reactive power under each actual photovoltaic active power condition; and determining a reactive compensation capacity by using a maximum reactive compensation demand of the reactive compensation demand under each actual photovoltaic active power condition, so as to allocate an

**(Cont. next page)**

EP 4 404 413 A1

idle capacity of a stored-energy field area according to the reactive compensation capacity. The technical solutions of the present invention improve the accuracy of the reactive compensation capacity allocation of the wind-photovoltaic-energy storage station.

S101
Calculating a maximum stored-energy active power and a maximum wind-power active power under different actual photovoltaic active power conditions

S102
Calculating a station reactive loss and a station reactive power corresponding to each actual photovoltaic active power condition based on an actual photovoltaic active power, the maximum stored-energy active power and the maximum wind-power active power of each actual photovoltaic active power condition

S103
Determining a reactive compensation demand under each actual photovoltaic power condition by using a difference between the station reactive loss and the station reactive power under each actual photovoltaic active power condition

S104
Determining a reactive compensation capacity by using a maximum reactive compensation demand of the reactive compensation demand under each actual photovoltaic active power condition, so as to allocate an idle capacity of a stored-energy field area according to the reactive compensation capacity

FIG. 1

## Description

This application claims priority to Chinese Patent Application No. 202211474415.3, filed with the China National Intellectual Property Administration on November 23, 2022, and entitled "REACTIVE COMPENSATION CAPACITY ALLOCATION METHOD, APPARATUS AND DEVICE FOR WIND-PHOTOVOLTAIC-ENERGY STORAGE STATION", the entire content of which is hereby incorporated by reference.

## TECHNICAL FIELD

The present invention relates to the field of power compensation and, in particular, to a reactive compensation capacity allocation method, apparatus and device of a wind-photovoltaic-energy storage station.

## BACKGROUND

At present, new energy stations such as wind power and photovoltaic need to be equipped with enough reactive compensation apparatus to meet demands of a power factor. At the same time, it is stipulated in many places that new energy stations should be equipped with a certain proportion of stored-energy to stabilize the randomness and fluctuation of new energy power generation output. As a high-quality regulating resource, stored-energy can not only regulate active output, but also assist reactive regulation. Reactive regulation by the stored-energy is mainly realized by a power convert system (power convert system, PCS), which may provide certain reactive support by using the idle capacity of stored-energy without affecting the active output of the system, thus reducing the demand of the station for building the reactive compensation apparatus, saving corresponding investment, improving the economy of project and reducing the electricity cost of the whole society. However, how much the reactive compensation capacity should be provided, and there is no accurate allocation method.

## SUMMARY

In view of this, embodiments of the present invention provide a reactive compensation capacity allocation method, apparatus and device of a wind-photovoltaic-energy storage station, which improves the accuracy of the reactive compensation capacity allocation of the wind-photovoltaic-energy storage station.

According to a first aspect, the present invention provides a reactive power compensation capacity allocation method for a wind power-photovoltaic-energy storage station, and the method includes: calculating a maximum stored-energy active power and a maximum wind-power active power under different actual photovoltaic active power conditions; calculating a station reactive loss and a station reactive power corresponding to each actual photovoltaic active power condition based on an actual photovoltaic active power, the maximum stored-energy active power and the maximum wind-power active power under each actual photovoltaic active power condition; determining a reactive compensation demand under each actual photovoltaic active power condition by using a difference between the station reactive loss and the station reactive power under each actual photovoltaic active power condition; and determining a reactive compensation capacity by using a maximum reactive compensation demand of the reactive compensation demand under each actual photovoltaic active power condition, so as to allocate an idle capacity of a stored-energy field area according to the reactive compensation capacity.

Optionally, the calculating the calculating the maximum stored-energy active power under different actual photovoltaic active power conditions includes: acquiring a rated photovoltaic active power, a rated wind-power active power and a rated stored-energy active power; determining a maximum station active power based on a sum of the rated photovoltaic active power and the rated wind-power active power; obtaining a plurality of different actual photovoltaic active powers by taking values from the rated photovoltaic active power at a preset proportional interval; determining a current allowable stored-energy active power by using a difference between the maximum station active power and a current actual photovoltaic active power, wherein the current allowable stored-energy active power represents a maximum active power that a station currently allows stored-energy to output; and determining a current maximum stored-energy active power corresponding to the current actual photovoltaic active power based on a smaller value of the current allowable stored-energy active power and the rated stored-energy active power.

Optionally, the calculating the maximum wind-power active power under different actual photovoltaic power conditions includes: determining a current allowable wind-power active power by using a difference between the maximum station active power, the current actual photovoltaic active power and the current maximum stored-energy active power, wherein the current allowable wind-power active power represents a maximum active power that the station currently allows the wind power to output; and determining a current maximum wind-power active power corresponding to the current actual photovoltaic active power based on a smaller value of the current allowable wind-power active power and the rated wind-power active power.

Optionally, when calculating the station reactive loss and the station reactive power corresponding to each actual photovoltaic active power condition, a voltage value used in the calculation is a voltage value that a rated station voltage is reduced by a preset factor.

Optionally, the preset factor is 0.97.

Optionally, the calculating the station reactive loss corresponding to each actual photovoltaic active power condition based on the actual photovoltaic active power, the maximum stored-energy active power and the maximum wind-power active power under each actual photovoltaic active power condition includes: calculating a wind-power field area reactive loss, a photovoltaic field area reactive loss, a stored-energy field area reactive loss, a boosting transformer reactive loss and a transmission line reactive loss corresponding to each actual photovoltaic active power condition based on the actual photovoltaic active power, the maximum stored-energy active power and the maximum wind-power active power under each actual photovoltaic active power condition; and calculating a sum of the wind-power field area reactive loss, the photovoltaic field area reactive loss, the stored-energy field area reactive loss, the boosting transformer reactive loss, and the transmission line reactive loss corresponding to each actual photovoltaic active power condition as the station reactive loss corresponding to each actual photovoltaic active power condition.

Optionally, the wind-power field area reactive loss comprises a reactive loss of a line from a wind-turbine to a box-transformer, a wind-turbine box-transformer reactive loss and a wind-power field area collector line reactive loss; the photovoltaic field area reactive loss comprises a reactive loss of a line from a photovoltaic inverter to a box-transformer, a photovoltaic box-transformer reactive loss and a photovoltaic field area collector line reactive loss; the stored-energy field area reactive loss comprises a reactive loss of a line from a stored-energy converter to a box-transformer, a stored-energy box-transformer reactive loss and a stored-energy field area collector line reactive loss.

According to a second aspect, an embodiment of the present invention provides a reactive compensation capacity allocation apparatus for a wind-photovoltaic-energy storage station, and the apparatus includes: a maximum active power determination module, configured to calculate a maximum stored-energy active power and a maximum wind-power active power under different actual photovoltaic active power conditions; a station reactive power calculation module, configured to calculate a station reactive loss and a station reactive power corresponding to each actual photovoltaic active power condition based on an actual photovoltaic active power, the maximum stored-energy active power and the maximum wind-power active power under each actual photovoltaic active power condition; a reactive compensation demand calculation module, configured to determine a reactive compensation demand under each actual photovoltaic active power condition by using a difference between the station reactive loss and the station reactive power under each actual photovoltaic active power condition; and a reactive compensation capacity allocation module, configured to determine a reactive compensation capacity by using a maximum reactive compensation demand of the reactive compensation demand under each actual photovoltaic active power condition, so as to allocate an idle capacity of the stored-energy field area according to the reactive compensation capacity.

According to a third aspect, an embodiment of the present invention provides a reactive compensation capacity allocation device for a wind-photovoltaic-energy storage station including: a memory and a processor, where the memory and the processor are in communication connection with each other, and computer instructions are stored in the memory, and the processor executes the method according to the first aspect or any one of the optional embodiments of the first aspect.

According to a fourth aspect, a computer-readable storage medium, the computer-readable storage medium stores computer instructions for causing the computer to perform the method according to the first aspect or any one of the optional embodiments of the first aspect.

The technical solutions provided by the present application has the following advantages:
in the technical solution provided in the present application, the photovoltaic active power is taken as an independent variable, and the maximum stored-energy active power and the maximum wind-power active power under different actual photovoltaic active power conditions are calculated; then the station reactive loss and station reactive power corresponding to each actual photovoltaic active power condition are calculated based on the actual photovoltaic active power, the maximum stored-energy active power and the maximum wind-power active power of each actual photovoltaic active power condition; then, the difference between the station reactive loss and the station reactive power is calculated under each actual photovoltaic active power condition, and the reactive compensation demand under each actual photovoltaic active power condition is obtained; finally, the reactive compensation capacity is determined according to the maximum reactive compensation demand. The determined reactive compensation capacity is used to allocate the idle capacity of stored-energy, so that the reactive loss generated by the wind-photovoltaic-energy storage station under any output condition may be compensated by the allocated idle capacity of stored-energy, while meeting the power factor of the wind-photovoltaic-energy storage station, the idle capacity of the energy storage system is fully used to provide reactive support, which reduces the demand of the wind-photovoltaic-energy storage station for building the reactive compensation apparatus, reduces the total investment of the power station, improves the economy of project and reduces the social electricity cost.

**BRIEF DESCRIPTION OF DRAWINGS**

The features and advantages of the present invention will be more clearly understood by referring to the drawings, which are schematic and should not be construed as limiting the present invention in any way, among them:

FIG. 1 shows a schematic diagram of steps of a reactive compensation capacity allocation method for a wind-photovoltaic-energy storage station in an embodiment of the present invention;
FIG. 2 shows a schematic structural diagram of a reactive compensation capacity allocation apparatus for a wind-photovoltaic-energy storage station in an embodiment of the present invention; and
FIG. 3 shows a schematic structural diagram of a reactive compensation capacity allocation device for a wind-photovoltaic-energy storage station in an embodiment of the present invention.

## DESCRIPTION OF EMBODIMENTS

In order to make the purposes, technical solutions and advantages of embodiments of the present invention more clear, the technical solutions in the embodiments of the present invention will be described clearly and completely in combination with the drawings in the embodiments of the present invention. Obviously, the described embodiments are not all of the embodiments but a part of the embodiments of the present invention. Based on the embodiments in the present invention, all other embodiments obtained by those skilled in the art without creative work fall within the protection scope claimed in the present invention.

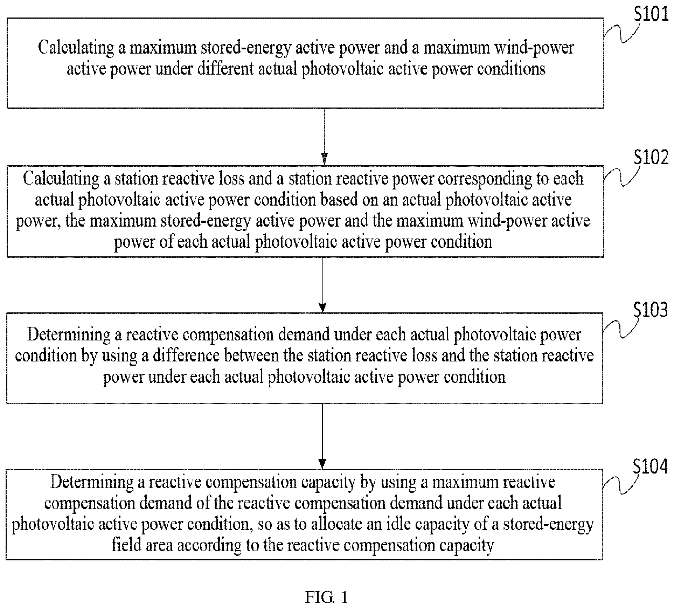

Referring to FIG. 1, in an embodiment, a reactive compensation capacity allocation method for a wind-photovoltaic-energy storage station specifically includes the following steps:

Step S101: calculating a maximum stored-energy active power and a maximum wind-power active power under different actual photovoltaic active power conditions;
Step S102: calculating a station reactive loss and a station reactive power corresponding to each actual photovoltaic active power condition based on an actual photovoltaic active power, the maximum stored-energy active power and the maximum wind-power active power of each actual photovoltaic active power condition;
Step S103: determining a reactive compensation demand under each actual photovoltaic active power condition by using a difference between the station reactive loss and the station reactive power under each actual photovoltaic active power condition; and
Step S104: determining a reactive compensation capacity by using a maximum reactive compensation demand of the reactive compensation demand under each actual photovoltaic active power condition, so as to allocate an idle capacity of the stored-energy field area according to the reactive compensation capacity.

Specifically, in a certain operation mode of the wind-photovoltaic-energy storage station, the reactive loss of the wind-photovoltaic-energy storage station minus the maximum reactive power generated by various reactive power sources is the demand for the reactive compensation capacity of the station in this mode. In the embodiment of the present invention, all normal operation modes are considered, and the maximum value of the reactive compensation capacity demand under each normal operation mode is determined; if the maximum value of the reactive compensation is taken as the minimum scale of the reactive compensation that the station needs to configure, the station can cope with reactive loss under all normal operation conditions, so that a power factor of the wind-photovoltaic-energy storage station reaches a maximum and the most efficient active output is ensured.

On the premise of constant voltage, the greater the active power of the station, the greater the current, the greater the corresponding station reactive loss, and the greater the demand for the reactive compensation capacity. Therefore, in this embodiment, the reactive compensation capacity demand is calculated according to the maximum station active power under the normal operation mode.

Based on the above ideas provided in the embodiment of the present invention, further considering that the reactive power provided by wind power is relatively small, and its impact on the reactive compensation capacity demand for the station is also small, and further considering that the active power output of the stored-energy mainly plays an auxiliary role and needs to change with the change of the active power output of photovoltaic and wind power, therefore, in this embodiment, the photovoltaic active power is taken as an independent variable, and the maximum stored-energy active power and the maximum wind power active power under different actual photovoltaic power conditions are calculated for multiple actual photovoltaic active power conditions, accordingly, the maximum station active power under different actual photovoltaic active power conditions is further determined. Then, the station reactive loss and the station reactive power corresponding to each actual photovoltaic active power condition are comprehensively calculated by using the actual photovoltaic active power, the maximum stored-energy active power and the maximum wind-power active power under each actual photovoltaic active power condition. Then, the reactive compensation demand corresponding to each actual photovoltaic active power condition is obtained by calculating the difference of the station reactive loss and the station reactive power corresponding to each actual photovoltaic active power condition. Finally, the maximum value of the reactive compensation demand is found from the reactive compensation demand corresponding to each actual photovoltaic active power condition, and the maximum value is regarded as the minimum scale of reactive compensation that the station needs to be configured with. In other words, when configuring the idle capacity of stored-energy, the minimum idle capacity allocated needs to reach the maximum value of reactive compensation demand, and the allocated capacity may be more than the maximum value of the reactive compensation demand, but not less than this value. Therefore, the idle capacity of the stored-energy configured in the embodiment of the present invention can cope with the reactive loss under various normal operation conditions, even if the wind-photovoltaic-energy storage all outputs with the maximum active power and the reactive loss generated by the station is very large, the allocated idle capacity of the stored-energy may also be used for the reactive compensation. If the allocated idle capacity of the stored-energy is equal to the maximum value of the reactive compensation demand, the waste caused by multiple allocation capacities can be avoided while meeting the reactive compensation demand, so that reactive support is provided by fully using the idle capacity of the energy storage system, the demand of the wind-photovoltaic-energy storage station for building the reactive compensation apparatus is reduced, the total investment of the power station is reduced, the economy of project is improved, and the social electricity cost is reduced.

Specifically, in an embodiment, in the reactive compensation capacity allocation method for the wind-photovoltaic-energy storage station provided by the embodiment of the present invention, when calculating the station reactive loss and station reactive power corresponding to each actual photovoltaic active power condition, the voltage value used in the calculation is a voltage value which is reduced by a preset factor to the rated voltage of the station. Specifically, the embodiment of the present invention further considers that under the premise that the station active power is constant, the lower the voltage, the greater the corresponding current, so that the station reactive loss is greater, and the demand for reactive compensation capacity of the station is greater, thus this embodiment calculates the reactive compensation capacity demand according to the lowest voltage under the normal operation mode. Generally, the voltage deviation of the new energy station specified by safety regulations should be within a range of -3% to +7% of the nominal voltage, thus the voltage involved in the calculation in the embodiment of the present invention is 0.97 times to the rated voltage, so that the maximum value of the station reactive compensation demand is obtained by calculation under two conditions of a maximum active power and a minimum voltage at the same time, so that the allocated reactive compensation capacity can meet the reactive loss generated by all normal operation conditions of the wind-photovoltaic-energy storage station.

Specifically, in an embodiment, the above Step S101 specifically includes the following steps:

Step 1: acquiring a rated photovoltaic active power, a rated wind-power active power and a rated stored-energy active power;
Step 2: determining a maximum station active power based on a sum of the rated photovoltaic active power and the rated wind-power active power;

Step 3: obtaining a plurality of different actual photovoltaic active powers by taking values from the rated photovoltaic active power at a preset proportional interval;
Step 4: determining a current allowable stored-energy active power by using a difference between the maximum station active power and a current actual photovoltaic active power, where the current allowable stored-energy active power represents the maximum active power that a station currently allows the stored-energy to output;
Step 5: determining the current maximum stored-energy active power corresponding to the current actual photovoltaic active power based on the smaller value of the current allowable stored-energy active power and the rated stored-energy active power;
Step 6: determining a current allowable wind-power active power by using a difference between the maximum station active power, the current actual photovoltaic active power and the current maximum stored-energy active power, where the current allowable wind-power active power represents the maximum active power that the station currently allows to the wind power to output; and
Step 7: determining a current maximum wind-power active power corresponding to the current actual photovoltaic active power based on a smaller value of the current allowable wind-power active power and the rated wind-power active power.

Specifically, before calculating the maximum wind-power active power and the maximum stored-energy active power with the photovoltaic active power as an independent variable, installed capacities $P_{wi,N}$, $P_{so,N}$ and $P_{st,N}$ of wind power, photovoltaic and stored-energy respectively, that is, the rated photovoltaic active power, the rated wind-power active power and the rated stored-energy active power, of the wind-photovoltaic-energy storage station are obtained at first. Because the stored-energy mostly plays a role of smoothing the output of new energy, promoting the absorption of new energy, etc., this embodiment temporarily ignores the situation that the stored-energy is full when wind power and photovoltaic are full, thereby determining that the maximum active power of the transmission line allocated by the wind-photovoltaic-energy storage station is represented as $P_N = P_{wi,N} + P_{so,N}$. That is, the maximum station active power allowed to be generated by the wind-photovoltaic-energy storage station is $P_N$. In order to take the photovoltaic active power $P_{so}$ as an independent variable and take values from the rated photovoltaic active power at a preset proportional interval to obtain a plurality of different actual photovoltaic active powers, for example, an appropriate positive integer n is selected as the number of different photovoltaic active powers, the value of the photovoltaic active power is

$$P_{so,i} = \frac{i}{n} P_{so,N}, i = 0, \cdots, n$$

.

In the formula, $P_{so,i}$ represents the i-th actual photovoltaic active power, and $\frac{i}{n}$ is the preset proportional interval, where n actual photovoltaic active powers are incrementally extracted from the rated photovoltaic power $P_{so,N}$ to characterize $n$ normal operation conditions.

Then, for each actual photovoltaic active power, the corresponding maximum stored-energy active power and wind-power maximum active power are calculated as follows.

The greater the stored-energy active power, the smaller the maximum reactive power it may provide, and the greater the demand of the station for the reactive compensation capacity. When the actual photovoltaic active power is $P_{so,i}$, the maximum stored-energy active power $P_{st,max,i}$ is $P_{st,max,i}$ = min {$P_{st,N}$, $P_N - P_{so,i}$}. That is, $P_N$ is the maximum active power that may be emitted externally by the wind-photovoltaic-energy storage station as a whole; and after subtracting the actual photovoltaic active power $P_{so,i}$, it is the allowable stored-energy active power, which characterizes the maximum active power that that the station allows stored-energy to generate as whole. $P_{st,N}$ is the rated power of stored-energy, and when the above two conditions are met, the maximum stored-energy active power takes the minimum of the above two values.

Similarly, after the actual photovoltaic active power $P_{so,i}$ and the maximum stored-energy active power $P_{st,max,i}$ are determined, the maximum wind-power active power is taken as $P_{wi,max,i}$ = min{$P_{wi,N}$, $P_N - P_{so,i} - P_{st,max,i}$}. $P_N - P_{so,i} - P_{st,max,i}$ represents the maximum active power that the station allows the wind power to generate after the actual photovoltaic active power and the maximum stored-energy active power are determined, that is, the allowable wind-power active power.

Specifically, in an embodiment, the above Step S 102 specifically includes the following steps:

Step 8: calculating a wind power field area reactive loss, a photovoltaic field area reactive loss, stored-energy field area reactive loss, a boosting transformer reactive loss and a transmission line reactive loss corresponding to each actual photovoltaic active power condition based on the actual photovoltaic active power, the maximum stored-energy active power and the maximum wind-power active power under each actual photovoltaic active power condition; and
Step 9: calculating a sum of the wind-power field area reactive loss, the photovoltaic field area reactive loss, the stored-energy field area reactive loss, the boosting transformer reactive loss and the transmission line reactive loss corresponding to each actual photovoltaic active power condition as station reactive loss corresponding to each actual photovoltaic active power condition.

Specifically, in the embodiment of the present invention, in order to further improve the accuracy of the reactive compensation capacity allocation, on the premise of improving the accuracy of the calculation of the reactive loss, this embodiment accurately calculates the reactive loss of the whole station from five aspects: the wind power field area reactive loss, the photovoltaic field area reactive loss, the stored-energy field area reactive loss, the boosting transformer reactive loss and the transmission line reactive loss. In the following way, the station reactive losses corresponding to $n$ actual photovoltaic active power conditions are calculated, respectively.

The reactive loss of the wind-photovoltaic-energy storage station corresponding to each actual photovoltaic power condition is obtained by summing five parts: the wind power field area reactive loss, the photovoltaic field area reactive loss, the stored-energy field area reactive loss, the boosting transformer reactive loss and the transmission line reactive loss. The calculation method of each part is as follows.

1. the wind power field area reactive loss

The wind power field area reactive loss is obtained by summing three parts: a reactive loss of a line from a wind-turbine to box-transformer, a wind turbine box-transformer reactive loss and a wind power field area collector line reactive loss. The calculation method of each part is as follows.

(a) The reactive loss from a single wind-turbine to box-transformer line is calculated by the following Formulas (1) and (2), where the voltage, the active power and the maximum power factor angle, of the wind turbine, are taken as a voltage, an active power and a power factor angle, respectively. All of the reactive losses of lines from a single wind turbine to box-transformer in the field area are summed to obtain the reactive loss of lines from a wind turbine to box-transformer in the whole field area.

The calculation formula of line reactive loss $Q_L$ (in Mvar) is:

$$Q_L = 3I^2 X \quad (1)$$

in the formula, I is a line current of the line, with the unit of kA, and is calculated by Formula (2); and X is the equivalent reactance of the line, with the unit of Q.

$$I = \frac{S}{\sqrt{3}U} = \frac{P}{\sqrt{3}U\cos\varphi} \qquad (2)$$

In the formula, S is an apparent power of the line, with the unit of MVA; U is a voltage of the line, with the unit of kV; P is an active power of the line, with the unit of MW, adopting the current maximum active power of wind power; $\cos\varphi$ is a power factor of the line.

(b) The reactive loss of a single wind-turbine box-transformer is calculated by the following Formula (3),

$$Q_T = \left( \frac{U_k\%}{100} \frac{S^2}{S_N^2} + \frac{I_0\%}{100} \right) S_N \qquad (3)$$

in the formula, $Q_T$ is the reactive loss of transformer expressed in Mvar; $U_k\%$ is the percentage of the short-circuit voltage of the transformer; $I_0\%$ is the percentage of the no-load current of the transformer; S is the apparent power of the transformer expressed in MVA; and $S_N$ is the rated capacity of the transformer expressed in MVA. The apparent power S is calculated according to the following Formula (4).

$$S = P / \cos\varphi_{wi,\max} \qquad (4)$$

In the formula, P is the current maximum active power of wind power expressed in MW; $\varphi_{wi,\max}$ is the maximum power factor angle of the wind turbine set. All of the reactive losses of single-wind-turbine box-transformers in the field area are summed to obtain the reactive loss of the wind-turbine box-transformers in the whole field area.

(c) According to the subsection of the wind power field area collector line, the reactive loss of a single-section collector line is calculated by Formula (1) and Formula (2), where the voltage is a voltage at the high voltage side of the wind-turbine box-transformer, the active power is the sum of the active powers flowing through the wind turbines of this section of collector line, and the power factor angle is the maximum power factor angle of the wind turbines. All of the reactive losses of a single-section collector line in the field area are summed to obtain the reactive loss of collector lines in the whole field area.

2. Calculation of photovoltaic field area reactive loss

The photovoltaic field area reactive loss is obtained by summing of three parts: a reactive loss of a line from a photovoltaic inverter to a box-transformer, a photovoltaic box transformer reactive loss and a photovoltaic field area collector line reactive loss. The calculation method of each part is as follows.

(a) The reactive loss of a line from a single photovoltaic inverter to the box transformer is calculated by the following Formulas (1) and (2), where parameters are replaced, and the parameters that need to be replaced are: a photovoltaic array and the actual photovoltaic active power are taken as the voltage and the active power, respectively, and the power factor is 1. All of the reactive losses of lines from a single photovoltaic inverter to the box-transformer in the field area are summed to obtain the reactive loss of lines from the photovoltaic inverter to the box-transformer in the whole field area.

(b) The reactive loss of the single photovoltaic box-transformer is calculated by Formula (3), where the power factor is 1, and the apparent power is equal to the active power of the photovoltaic array. All of the reactive losses of single photovoltaic box-transformers in the field area are summed to obtain the reactive loss of the photovoltaic box-transformers in the whole field area.

(c) According to the subsection of the collector line in the photovoltaic field area, the reactive loss of a single-section collector line is calculated by Formula (1) and Formula (2), where the voltage is the voltage at the high-voltage side of the photovoltaic box-transformer, the active power is the sum of the actual photovoltaic active powers flowing through this section of collector line, and the power factor is 1. All of the reactive losses of single-section collector lines in the field area are summed to obtain the reactive loss of collector lines in the whole field area.

3. Calculation of stored-energy field area reactive loss

The stored-energy field area reactive loss is obtained by summing of three parts: a reactive loss of a line from a stored-energy converter to a box-transformer, a stored-energy box-transformer reactive loss and a reactive loss of a stored-energy field area collector line. The calculation method of each part is as follows.

(a) The reactive loss of a line from a single stored-energy converter to a box-transformer is calculated by Formula (1) and Formula (2), where the voltage is a voltage of a battery system connected to the stored-energy converter, and the apparent power is the maximum capacity of the stored-energy converter. All of the reactive losses of lines from the single stored-energy converter to the box-transformer in the field area are summed to obtain the reactive loss of lines from the stored-energy converter to the box-transformer in the whole field area.

(b) The reactive loss of a single stored-energy box-transformer is calculated by Formula (3), where the apparent power is the maximum capacity of the stored-energy converter. All of the reactive losses of the single stored-energy box-transformers in the field area are summed to obtain the reactive loss of stored-energy box-transformers in the whole field area.

(c) According to the subsection of the collector line in the stored-energy field area, the reactive loss of a single-section collector line is calculated by Formula (1) and Formula (2), where the voltage is a voltage at the high-voltage side of the stored-energy box-transformer, and the apparent power is a sum of the maximum capacities of the stored-energy converters flowing through this section of collector line of the power. All of the reactive losses of a single-section collector lines in the field area are summed to obtain the reactive loss of the collector lines in the whole field area.

4. Calculation of boosting transformer reactive loss

The reactive loss of a single boosting transformer is calculated by Formula (3), where the apparent power is obtained by dividing the active power by the power factor with reference formula (4), the active power is a sum of all the active powers of wind power, photovoltaic and stored-energy that are connected to the boosting transformer, and the power factor is determined according to relevant local regulations. All of the reactive losses of the single boosting transformers in the field area are summed to obtain the reactive loss of the boosting transformers in the whole field area.

5. Calculation of transmission line reactive loss

The reactive loss of a single transmission line is calculated by Formula (1) and Formula (2), where the voltage is a voltage at the high voltage side of the boosting transformer, the active power is a sum of all of the active powers of wind power, photovoltaic and stored-energy that are connected to the transmission line, and the power factor is determined according to relevant local regulations. All of the reactive losses of the single transmission lines in the field area are summed to obtain the reactive loss of the transmission lines in the whole wind-photovoltaic-energy storage station.

The accuracy of reactive loss estimation of the whole station is further improved by calculating the reactive losses of the above parts.

In addition, in this embodiment, the steps of calculating the station reactive power corresponding to each actual photovoltaic active power condition based on the actual photovoltaic active power, the maximum active power of stored-energy and the maximum active power of wind power of each actual photovoltaic active power condition are as follows.

In this embodiment, in order to the reactive compensation capacity, it is necessary to first calculate a part that the wind-photovoltaic-stored-energy itself may provide reactive power as a reactive power supply, including the following.

1. Wind farm

The maximum reactive power that the wind farm can provide is $Q_{wi,max}$ (expressed in Mvar.

$$Q_{wi,\max} = P\tan\varphi_{wi,\max}.$$

In the formula, P is the maximum wind power active power expressed in MW; and $\varphi_{wi,max}$ is the maximum power factor angle of the wind turbine set.

2. Photovoltaic power station and stored-energy power station

A photovoltaic inverter and a stored-energy converter have a similar principle, and both can provide reactive support for the system. The maximum reactive power $Q_{max}$ (expressed in Mvar) can be provided by using the idle capacity of the photovoltaic inverter or the stored-energy converter.

$$Q_{\max} = \sqrt{S_{\max}^2 - P^2}$$

In the formula, $S_{max}$ is the maximum capacity of the inverter or converter, expressed in MVA; P is the active power of the inverter or converter, expressed in MW; if it is a photovoltaic power station, P is the current actual photovoltaic active power; and if it is stored-energy, P is the current maximum active power of stored-energy.

Through the above steps, in the technical solution provided in the present application, the photovoltaic active power is taken as an independent variable, and the maximum active power of stored-energy and the maximum active power of wind power under different actual photovoltaic active power conditions are calculated; then the station reactive loss and station reactive power corresponding to each actual photovoltaic active power condition is calculated based on the actual photovoltaic active power, the maximum active power of stored-energy and the maximum active power of wind power of each actual photovoltaic active power condition; then, the difference between the station reactive loss and the station reactive power is calculated under each actual photovoltaic active power condition, and the reactive compensation demand under each actual photovoltaic active power condition is obtained; finally, the reactive compensation capacity is determined according to the maximum reactive compensation demand. The determined reactive compensation capacity is used to allocate the idle capacity of stored-energy, so that the reactive loss generated by the wind power-photovoltaic-energy storage station under any output condition may be compensated by the allocated idle capacity of stored-energy. While meeting the power factor of the wind-photovoltaic-energy storage station, the idle capacity of the stored-energy system is fully used to provide reactive support, which reduces the demand of the wind-photovoltaic-energy storage station for building the reactive compensation apparatus, reduces the total investment of the power station, improves the economy of project and reduces the social electricity cost.

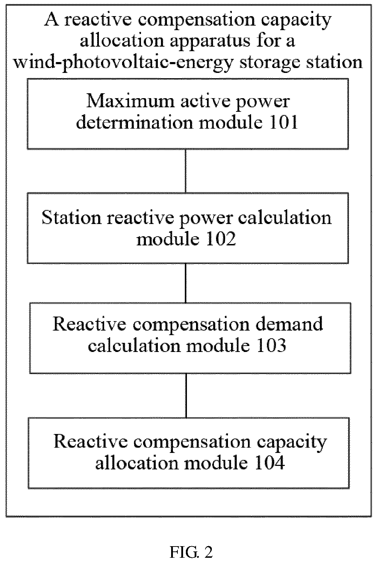

As shown in FIG. 2, this embodiment also provides a reactive compensation capacity allocation apparatus for a wind-photovoltaic-energy storage station, and the apparatus includes:

> a maximum active power determination module 101, configured to calculate a maximum stored-energy active power and a maximum wind-power active power under different actual photovoltaic active power conditions. For details, please refer to the related description of Step S101 in the above method embodiment, which will not be repeated here;
> a station reactive power calculation module 102, configured to calculate a station reactive loss and a station reactive power corresponding to each actual photovoltaic active power condition based on the actual photovoltaic active power, the maximum stored-energy active power and the maximum wind-power active power of each actual photovoltaic active power condition. For details, please refer to the related description of Step S102 in the above method embodiment, which will not be repeated here;
> a reactive compensation demand calculation module 103, configured to determine a reactive compensation demand under each actual photovoltaic active power condition by using a difference between the station reactive loss and the station reactive power under each actual photovoltaic active power condition. For details, please refer to the related description of Step S103 in the above method embodiment, which will not be repeated here; and
> a reactive compensation capacity allocation module 104, configured to determine a reactive compensation capacity by using a maximum reactive compensation demand of the reactive compensation demand under each actual photovoltaic power condition, so as to allocate an idle capacity of the stored-energy field area according to the reactive compensation capacity. For details, please refer to the related description of Step S104 in the above method embodiment, which will not be repeated here.

A reactive compensation capacity allocation apparatus for a wind-photovoltaic-energy storage station provided in an embodiment of the present invention is configured to execute the reactive compensation capacity allocation method for the wind-photovoltaic-energy storage station provided in the above embodiment, and implementation modes and principles thereof are the same. For details, please refer to the related description of the above method embodiment, which will not be repeated here.

Through the cooperation of the above components, in the technical solution provided in the present application, the photovoltaic active power is taken as an independent variable, and the maximum stored-energy active power and the maximum wind-power active power under different actual photovoltaic active power conditions are calculated; then the station reactive loss and station reactive power corresponding to each actual photovoltaic active power condition are calculated based on the actual photovoltaic active power, the maximum stored-energy active power and the maximum wind-power active power of each actual photovoltaic active power condition; then, the difference between the station reactive loss and the station reactive power is calculated under each actual photovoltaic active power condition, and the reactive compensation demand under each actual photovoltaic active power condition is obtained; finally, the reactive compensation capacity is determined according to the maximum reactive compensation demand. The determined reactive compensation capacity is used to allocate the idle capacity of stored-energy, so that the reactive loss generated by the wind-photovoltaic-energy storage station under any output condition may be compensated by the allocated idle capacity of stored-energy, while meeting the power factor of the wind-photovoltaic-energy storage station, the idle capacity of the energy storage system is fully used to provide reactive support, which reduces the demand of the wind-photovoltaic-energy storage station for building the reactive compensation apparatus, reduces the total investment of the power station, improves the economy of project and reduces the social electricity cost.

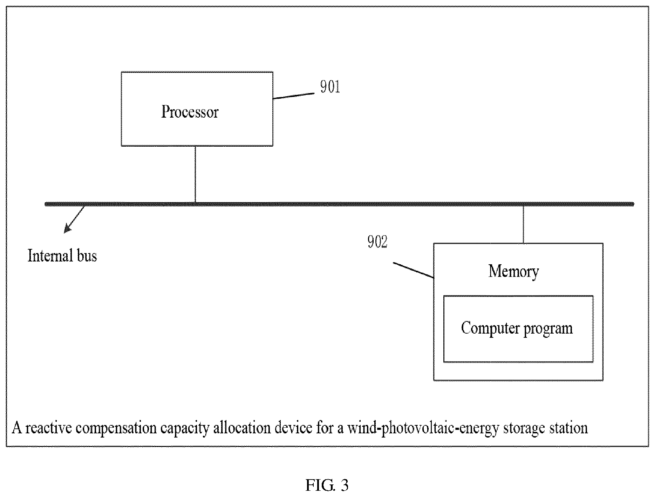

FIG. 3 shows a reactive compensation capacity device for a wind-photovoltaic-energy storage station according to an embodiment of the present invention. The device includes a processor 901 and a memory 902, which may be connected by a bus or other means, and in FIG. 3, the connection by a bus is taken as an example.

The processor 901 may be a central processing unit (Central Processing Unit, CPU). The processor 901 may also be chips such as other general-purpose processors, a digital signal processor (Digital Signal Processor, DSP), an application specific integrated circuit (Application Specific Integrated Circuit, ASIC), a field-programmable gate array (Field-Programmable Gate Array, FPGA) or other programmable logic devices, a discrete gate or a transistor logic device, a discrete hardware component, or a combination of the above-mentioned chips.

As a non-transient computer-readable storage medium, the memory 902 may be configured to store non-transient software programs, non-transient computer-executable programs and modules, such as program instructions/modules corresponding to the method in the above method embodiment. The processor 901 executes various functional applications and data processing of the processor, that is, realizes the method in the above method embodiment, by running non-transient software programs, instructions and modules stored in the memory 902.

The memory 902 may include a program storage area and a data storage area, where the program storage area may store an operating system and application programs required by at least one function; and the data storage area may store data created by the processor 901 and the like. In addition, the memory 902 may include a high-speed random access memory, and may also include a non-transient memory, for example, at least one disk memory device, a flash memory device, or other non-transient solid-state memory devices. In some embodiments, the memory 902 may optionally include memories disposed remotely from the processor 901, and these remote memories may be connected to the processor 901 through a network. Examples of the above networks include, but are not limited to, the Internet, an intranet, a local area network, a mobile communication network, and a combination thereof.

One or more modules are stored in the memory 902, and when executed by the processor 901, execute the method in the above method embodiment.

The specific details of the reactive compensation capacity device of the above-mentioned wind-photovoltaic-energy storage station may be understood by correspondingly referring to the corresponding related description and effects in the above-mentioned method embodiment, and will not be repeated here.

It may be understood by those of skill in the art that all or part of the processes in the method of the above-mentioned embodiment may be completed by instructing related hardware through computer programs, and the realized programs may be stored in a computer-readable storage medium, which, when the programs are executed, may include the processes of the above-mentioned method. The storage medium may be a magnetic disk, an optical disk, a read-only memory (Read-Only Memory, ROM), a random access memory (Random Access Memory, RAM), a flash memory (Flash Memory), a hard disk drive (Hard Disk Drive, HDD) or a solid-state drive (Solid-State Drive, SSD), etc.; and the storage medium may also include a combination of the above kinds of memories.

Although the embodiments of the present invention have been described in combination with the drawings, various modifications and variations may be made by those of skill in the art without departing from the spirit and scope of the present invention, and such modifications and variations all fall within the scope defined by the appended claims.

## Claims

1. A reactive compensation capacity allocation method for a wind-photovoltaic-energy storage station, comprising:

calculating a maximum stored-energy active power and a maximum wind-power active power under different actual photovoltaic active power conditions;

calculating a station reactive loss and a station reactive power corresponding to each actual photovoltaic active power condition based on an actual photovoltaic active power, the maximum stored-energy active power and the maximum wind-power active power under each actual photovoltaic active power condition;

determining a reactive compensation demand under each actual photovoltaic active power condition by using a difference between the station reactive loss and the station reactive power under each actual photovoltaic active power condition; and

determining a reactive compensation capacity by using a maximum reactive compensation demand of the reactive compensation demand under each actual photovoltaic active power condition, so as to allocate an idle capacity of a stored-energy field area according to the reactive compensation capacity.

2. The method according to claim 1, wherein the calculating the maximum stored-energy active power under different actual photovoltaic active power conditions comprises:

acquiring a rated photovoltaic active power, a rated wind-power active power and a rated stored-energy active power;

determining a maximum station active power based on a sum of the rated photovoltaic active power and the rated wind-power active power;

obtaining a plurality of different actual photovoltaic active powers by taking values from the rated photovoltaic active power at a preset proportional interval;

determining a current allowable stored-energy active power by using a difference between the maximum station active power and a current actual photovoltaic active power, wherein the current allowable stored-energy active power represents a maximum active power that a station currently allows stored-energy to output; and

determining a current maximum stored-energy active power corresponding to the current actual photovoltaic active power based on a smaller value of the current allowable stored-energy active power and the rated stored-energy active power.

3. The method according to claim 2, wherein the calculating the maximum wind-power active power under different actual photovoltaic power conditions comprises:

> determining a current allowable wind-power active power by using a difference between the maximum station active power, the current actual photovoltaic active power and the current maximum stored-energy active power, wherein the current allowable wind-power active power represents a maximum active power that the station currently allows the wind power to output; and
>
> determining a current maximum wind-power active power corresponding to the current actual photovoltaic active power based on a smaller value of the current allowable wind-power active power and the rated wind-power active power.

4. The method according to claim 1, wherein when calculating the station reactive loss and the station reactive power corresponding to each actual photovoltaic active power condition, a voltage value used in the calculation is a voltage value that a rated station voltage is reduced by a preset factor.

5. The method according to claim 4, wherein the preset factor is 0.97.

6. The method according to claim 1, wherein the calculating the station reactive loss corresponding to each actual photovoltaic active power condition based on the actual photovoltaic active power, the maximum stored-energy active power and the maximum wind-power active power under each actual photovoltaic active power condition comprises:

> calculating a wind-power field area reactive loss, a photovoltaic field area reactive loss, a stored-energy field area reactive loss, a boosting transformer reactive loss and a transmission line reactive loss corresponding to each actual photovoltaic active power condition based on the actual photovoltaic active power, the maximum stored-energy active power and the maximum wind-power active power under each actual photovoltaic active power condition; and
>
> calculating a sum of the wind-power field area reactive loss, the photovoltaic field area reactive loss, the stored-energy field area reactive loss, the boosting transformer reactive loss, and the transmission line reactive loss corresponding to each actual photovoltaic active power condition as the station reactive loss corresponding to each actual photovoltaic active power condition.

7. The method according to claim 6, wherein the wind-power field area reactive loss comprises a reactive loss of a line from a wind-turbine to a box-transformer, a wind-turbine box-transformer reactive loss and a wind-power field area collector line reactive loss; the photovoltaic field area reactive loss comprises a reactive loss of a line from a photovoltaic inverter to a box-transformer, a photovoltaic box-transformer reactive loss and a photovoltaic field area collector line reactive loss; the stored-energy field area reactive loss comprises a reactive loss of a line from a stored-energy converter to a box-transformer, a stored-energy box-transformer reactive loss and a stored-energy field area collector line reactive loss.

8. A reactive compensation capacity allocation apparatus for a wind-photovoltaic-energy storage station, comprising:

> a maximum active power determination module, configured to calculate a maximum stored-energy active power and a maximum wind-power active power under different actual photovoltaic active power conditions;
>
> a station reactive power calculation module, configured to calculate a station reactive loss and a station reactive power corresponding to each actual photovoltaic active power condition based on an actual photovoltaic active power, the maximum stored-energy active power and the maximum wind-power active power under each actual photovoltaic active power condition;
>
> a reactive compensation demand calculation module, configured to determine a reactive compensation demand under each actual photovoltaic active power condition by using a difference between the station reactive loss and the station reactive power under each actual photovoltaic active power condition; and
>
> a reactive compensation capacity allocation module, configured to determine a reactive compensation capacity by using a maximum reactive compensation demand of the reactive compensation demand under each actual photovoltaic active power condition, so as to allocate an idle capacity of the stored-energy field area according to the reactive compensation capacity.

9. A reactive compensation capacity allocation device for a wind-photovoltaic-energy storage station, comprising:
a memory and a processor, wherein the memory and the processor are in communication connection with each other, and computer instructions are stored in the memory, and the processor executes the method according to any one of claims 1 to 7 by executing the computer instructions.

10. A computer-readable storage medium, wherein the computer-readable storage medium stores computer instructions for causing a computer to perform the method according to any one of claims 1 to 7.

| | S101 |
|---|---|
| Calculating a maximum stored-energy active power and a maximum wind-power active power under different actual photovoltaic active power conditions | |

| | S102 |
|---|---|
| Calculating a station reactive loss and a station reactive power corresponding to each actual photovoltaic active power condition based on an actual photovoltaic active power, the maximum stored-energy active power and the maximum wind-power active power of each actual photovoltaic active power condition | |

| | S103 |
|---|---|
| Determining a reactive compensation demand under each actual photovoltaic power condition by using a difference between the station reactive loss and the station reactive power under each actual photovoltaic active power condition | |

| | S104 |
|---|---|
| Determining a reactive compensation capacity by using a maximum reactive compensation demand of the reactive compensation demand under each actual photovoltaic active power condition, so as to allocate an idle capacity of a stored-energy field area according to the reactive compensation capacity | |

FIG. 1

A reactive compensation capacity
allocation apparatus for a
wind-photovoltaic-energy storage station

Maximum active power
determination module 101

Station reactive power calculation
module 102

Reactive compensation demand
calculation module 103

Reactive compensation capacity
allocation module 104

FIG. 2

| | |
| Processor | 901 |

Internal bus

902

| Memory |
| Computer program |

A reactive compensation capacity allocation device for a wind-photovoltaic-energy storage station

FIG. 3

## INTERNATIONAL SEARCH REPORT

| | International application No. |
|---|---|
| | **PCT/CN2023/130852** |

### A. CLASSIFICATION OF SUBJECT MATTER

H02J3/28(2006.01)i; H02J3/32(2006.01)i; H02J3/18(2006.01)i; H02J3/38(2006.01)i

According to International Patent Classification (IPC) or to both national classification and IPC

### B. FIELDS SEARCHED

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNABS, CNTXT, CNKI, IEEE, EPTXT, WOTXT, USTXT, VEN: 风, 光伏, 太阳能, 储能, 风光储, 无功, 补偿, 配置, 容量, 最大, 有功, 实时, 实发, wind, photovoltaic, solar, energy storage, reactive, compensation, configuration, capacity, maximum, active, real-time

### C. DOCUMENTS CONSIDERED TO BE RELEVANT

| Category* | Citation of document, with indication, where appropriate, of the relevant passages | Relevant to claim No. |
|---|---|---|
| PX | CN 115764944 A (CHINA THREE GORGES CORP. et al.) 07 March 2023 (2023-03-07) claims 1-10 | 1-10 |
| A | CN 114865649 A (CHINA THREE GORGES CORP.) 05 August 2022 (2022-08-05) description, paragraphs 0025-0098, and figures 1-4 | 1-10 |
| A | CN 114759620 A (CHINA THREE GORGES CORP. et al.) 15 July 2022 (2022-07-15) entire document | 1-10 |
| A | CN 104578086 A (NORTH CHINA ELECTRIC POWER UNIVERSITY (BAODING)) 29 April 2015 (2015-04-29) entire document | 1-10 |
| A | CN 105591391 A (STATE GRID CORPORATION OF CHINA et al.) 18 May 2016 (2016-05-18) entire document | 1-10 |
| A | CN 105720573 A (ELECTRIC POWER RESEARCH INSTITUTE OF STATE GRID JIBEI ELECTRIC POWER CO., LTD. et al.) 29 June 2016 (2016-06-29) entire document | 1-10 |

☑ Further documents are listed in the continuation of Box C. ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **03 January 2024** | **10 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/130852** |

**C.    DOCUMENTS CONSIDERED TO BE RELEVANT**

| Category* | Citation of document, with indication, where appropriate, of the relevant passages | Relevant to claim No. |
|---|---|---|
| A | CN 115313399 A (NORTHWEST ELECTRIC POWER DESIGN INSTITUTE CO., LTD. OF CHINA POWER ENGINEERING CONSULTING GROUP) 08 November 2022 (2022-11-08) entire document | 1-10 |
| A | US 2021184462 A1 (VESTAS WIND SYSTEMS A/S) 17 June 2021 (2021-06-17) entire document | 1-10 |
| A | WO 2014079278 A1 (STATE GRID CORPORATION OF CHINA et al.) 30 May 2014 (2014-05-30) entire document | 1-10 |

Form PCT/ISA/210 (second sheet) (July 2022)

**INTERNATIONAL SEARCH REPORT**
Information on patent family members

International application No.

**PCT/CN2023/130852**

| Patent document cited in search report | | | Publication date (day/month/year) | Patent family member(s) | | | Publication date (day/month/year) |
|---|---|---|---|---|---|---|---|
| CN | 115764944 | A | 07 March 2023 | None | | | |
| CN | 114865649 | A | 05 August 2022 | None | | | |
| CN | 114759620 | A | 15 July 2022 | None | | | |
| CN | 104578086 | A | 29 April 2015 | None | | | |
| CN | 105591391 | A | 18 May 2016 | None | | | |
| CN | 105720573 | A | 29 June 2016 | None | | | |
| CN | 115313399 | A | 08 November 2022 | None | | | |
| US | 2021184462 | A1 | 17 June 2021 | US | 11264802 | B2 | 01 March 2022 |
| | | | | EP | 3669433 | A1 | 24 June 2020 |
| | | | | EP | 3669433 | B1 | 27 October 2021 |
| | | | | WO | 2019034215 | A1 | 21 February 2019 |
| WO | 2014079278 | A1 | 30 May 2014 | CN | 103414197 | A | 27 November 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211474415